# EUROPEAN PATENT APPLICATION

(11) **EP 3 827 714 A1**
(43) Date of publication of application: **02.06.2021**
(21) Application number: 18928120.7
(22) Date of filing: 25.07.2018
(51) Int. Cl.: A47J 31/44

(54) **IMPROVED WATER-INJECTION CHAMBER FOR CAPSULE COFFEE MACHINES**

(71) Applicant: Crem International Spain S.L., 46701 Gandía (Valencia) (ES)
(72) Inventor: CLIMENT MARTÍNEZ, Daniel, 46701 Gandía (Valencia) (ES); CLIMENT MARTÍNEZ, Oscar, 46701 GANDÍA (Valencia) (ES)
(74) Representative: Rodriguez Oca, Jesus
(86) International application number: PCT/ES2018/070529
(87) International publication number: WO 2020/021128

(57) **Abstract**

The invention provides a water-injection chamber for capsule coffee machines that makes it possible to regulate and maintain constant a predetermined temperature of the water to be injected into the coffee capsule, also facilitating the adjustment of the input flow of hot water into the brewing chamber of said coffee machines, making it possible to adjust the temperature and the flow of water to be injected into a capsule according to the specific needs of each capsule without needing to modify or install new elements that increase the production cost and complicate the manufacturing process.

## Description

The present invention relates to an improved water injection chamber for capsule coffee makers.

More particularly, the invention provides a water injection chamber for this type of coffee makers, this chamber allowing regulating and maintaining a given constant temperature of the water being injected into the coffee capsule, likewise enabling the regulating of the flow rate of hot water entering the infusion chamber of said coffee makers. The system of the invention thus allows an adjusting of the temperature and the flow rate of water being injected into a capsule according to the specific needs of that capsule, without the need to modify or install new elements that would make the production more expensive and complicate the manufacturing process.

Capsule coffee makers are well known, there being many models of both coffee makers and capsules on the market.

Basically, these capsule coffee makers comprise a boiler where the water is heated, for example by means of a Thermoblok device or a resistor, a pump allowing the water to move through corresponding ducts, and an injection chamber comprising an injector for injecting the hot water into an infusion chamber where the coffee capsule is situated.

For example, the document EP1715778 describes a machine for preparing hot beverages of this type.

One drawback of this type of known coffee makers is the drop in the water temperature as it moves from the boiler to the injection chamber, since it needs to pass through colder components, arriving at the infusion chamber with a temperature less than that of the boiler, so that the resulting coffee does not have an adequate temperature for its preparation and/or the coffee does not reach an optimal temperature, thus adversely affecting the thermal stability during its entire processing.

On the other hand, the presence of a great variety of capsule designs, including coffee of different origin, type, granulometry, and/or more or less of the product, may require a regulating of the temperature and the flow rate of the water to obtain the most satisfactory beverage according to the particular characteristics of each capsule.

For example, in the document ES2253116, the heating boiler is eliminated and replaced by a heater coupled to the water circulation duct in order to facilitate the heating of the water and maintain the temperature in more constant manner along the water circulation circuit. However, the solution proposed in this document is not adequate for capsule coffee makers, especially those for professional use, for example in the hospitality industry, where it is necessary to prepare multiple beverages quickly, that is, to maintain the water used at a certain temperature to allow rapid service. The present invention solves the above-mentioned problems by providing a water injection chamber for capsule coffee makers that enables the regulating and maintaining of a given constant temperature of the water being injected into the capsule, likewise enabling a regulating of the flow rate of the hot water entering the infusion chamber of said coffee makers.

These hot water injection chambers are usually formed from a plastic block having a hot water inlet duct for the hot water coming from the boiler associated with an injector which injects this water into a beverage capsule situated in an infusion chamber.

The injection chamber of the invention, unlike these conventional chambers, is formed from a brass block, comprising an inlet duct for hot water coming from the boiler, this hot water inlet duct comprising a temperature regulating nozzle, and an outlet duct for hot water going from the chamber to the boiler, thus providing a thermal siphoning effect that allows the maintaining of a constant temperature of the injection chamber. Likewise, the chamber of the invention comprises a nozzle for adjusting the hot water flow rate, this nozzle being associated with the injector of water into the capsule. In this way, a simple changing of the flow rate adjusting nozzle enables a modifying of the movement of the hot water flow to the injector, adapting that flow to the specific characteristics of each capsule.

The invention shall be explained in further detail below, based on an embodiment of the invention and making reference to the accompanying figures, where:
Figure 1: a schematic view of a capsule coffee maker, comprising the chamber of the invention.
Figure 2: a schematic perspective view of a section of the injection chamber.
Figure 3: a cross-sectional view of the injection chamber.
Figure 4: a) a schematic view of a flow regulating nozzle; b) a schematic view of a temperature regulating nozzle.
Figure 5: a graph showing the results of a test according to Example 1, Configuration 1.
Figure 6: a graph showing the results of a test according to Example 1, Configuration 2.
Figure 7: a graph showing the results of a test according to Example 1, Configuration 3.
Figure 8: a graph showing the results of a test according to the Comparative Example 2.

In the context of the invention, "injection chamber" means the chamber where the water is injected and subsequently goes to an infusion chamber, where the product capsule is situated.

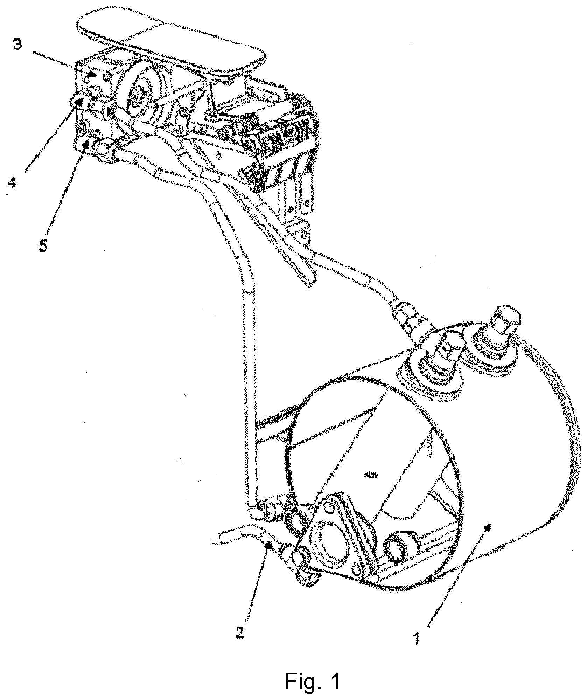

As can be seen in Figure 1, capsule coffee makers comprise a boiler (1) where the water is heated, being connected by a duct (2) to a source of tap water or to a reservoir, and an injection chamber (3) for injecting the hot water into an infusion chamber (not shown), where the coffee capsule is situated. Usually, the capsule is accommodated in movable manner, so that the capsule can be loaded and extracted during each operation.

As mentioned previously, the injection chamber (3) is formed by a brass block.

In this regard, the brass material (lead-free) is specially adapted to the manufacturing of the chamber of the invention thanks to its good thermal conduction properties, being at the same time resistant to corrosion. Furthermore, the use of this material obviates the need for coatings and reduces the need for maintenance of the injection chamber. Since it is an easily reusable product, which can be melted and cast as many times as needed, the present chamber is a recyclable element.

As is seen in Figure 1, the injection chamber of the invention comprises an inlet duct (4) for hot water coming from the boiler and a water outlet duct (5) located downstream from the inlet duct (4) and directing the return water to the boiler (1).

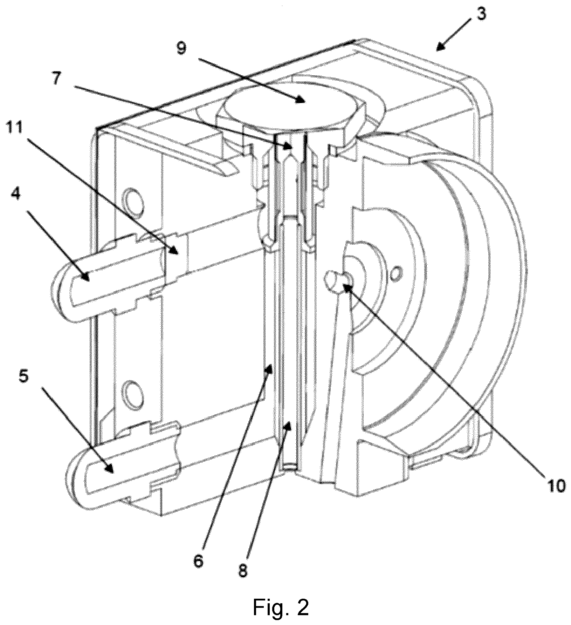

As is seen in Figure 2, the chamber of the invention comprises a channel (6) extending from one end to the other of the chamber (3) and perpendicular to the ducts (4, 5), said ducts (4, 5) terminating in said channel (6). As is shown, a fluidic communication exists between the water inlet and outlet ducts (4, 5) of the chamber and the channel (6).

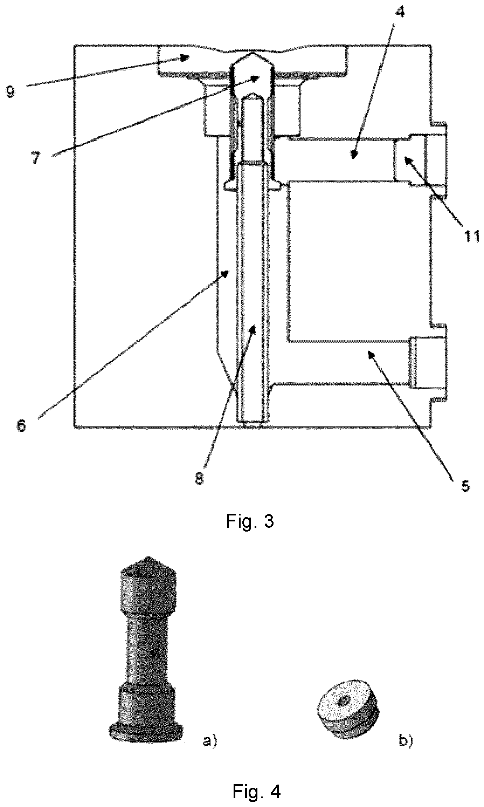

Referring to figures 2 and 3, in a zone accessible to the chamber (3) by the user, in the upper part of the chamber (3) in the figure, this channel (6) comprises a nozzle (7) regulating the flow rate of water entering the infusion chamber (not shown), cooperating with a connection pipe (8) for a means of activating the entry of water into said infusion chamber, such as an electric valve. At the upper end of the channel (6) and near the nozzle (7), a means of closure (9) closes the channel (6) at the top and serves as a means of adjusting the nozzle (7).

In one embodiment, the nozzle (7) comprises a filter to filter the hot water going to the infusion chamber.

Thus, a simple changing of the flow adjusting nozzle (7) allows a modification of the flow of hot water going from the injector to the infusion chamber (not shown), adapting that flow to the specific characteristics of each capsule. The situation of this nozzle (7) in a zone of the chamber of the invention that is accessible to the user facilitates this change, it not being necessary to modify the entire chamber of the invention for this purpose.

For its part, the conduit (4) for entry of water into the chamber (3) comprises inside it a nozzle that regulates the temperature (11) of said chamber, making it possible to control the temperature of the chamber by modifying the flow rate of hot water coming into the interior of the chamber and to the channel (6).

The combination of the water inlet and outlet conduits (4, 5) of the chamber (3) and the channel (6) allows the heated water arriving from the boiler (1) to maintain the chamber (3) at a desired temperature, adequate for the preparation of the beverage, preventing cold water from arriving in the chamber due to the water movement through the ducts (4, 5) from the boiler (3), thanks to a closed circuit of hot water circulation, using a thermal siphoning effect, when the coffee maker is turned on and in a resting mode.

When the operating cycle of the coffee maker is activated in order to dispense the hot beverage, that is, when the electric valve is operated for example, hot water can go from the nozzle (7) to the exit opening (10) of the injection chamber in fluidic communication with the infusion chamber, where the coffee capsule is located, allowing the coffee to emerge.

When this process is finished, the same electric valve, operating through the connection pipe (8) on the nozzle (7), closes the passage of water to the injection chamber, so that the hot water is maintained in said circuit created by the channels (4, 5) and the channel (6).

### Examples

The following summarizes the tests and comparative tests carried out with the injection chamber of the invention and a conventional chamber in regard to the stabilization of the outlet temperature of hot water at the infusion chamber.

### Example 1: Temperature test with the chamber of the invention installed in a conventional capsule coffee maker

This test evaluated the thermal stability of the mechanical components of the coffee maker by means of temperature probes installed at 4 measurement points for a conventional capsule coffee maker of two groups or services: injection chamber group 1, coffee outlet group 1, injection chamber group 2, coffee outlet group 2. The data of the probes was collected with a Picolog® instrument.

The test conditions were as follows:
- Ambient temperature: 21° C
- Coffee maker used: coffee maker with 2 automatic ejector groups having an injection chamber according to the invention
- Capsules used: Lavazza Blue
- Number of cycles in each configuration: 5
- Flow rate: 40 mL. The flow rate for all the tests is the same, only changing the temperatures and the dispensing time to reach the preconfigured flow rate due to the flow nozzle
- Temperature nozzles: different for each group
- Flow nozzles: the same in both groups

### Configuration 1:

| | Diameter of temperature nozzle | Diameter of flow nozzle |
|---|---|---|
| Group 1 | 3.5 mm | 0.3 mm |
| Group 2 | 2.5 mm | |

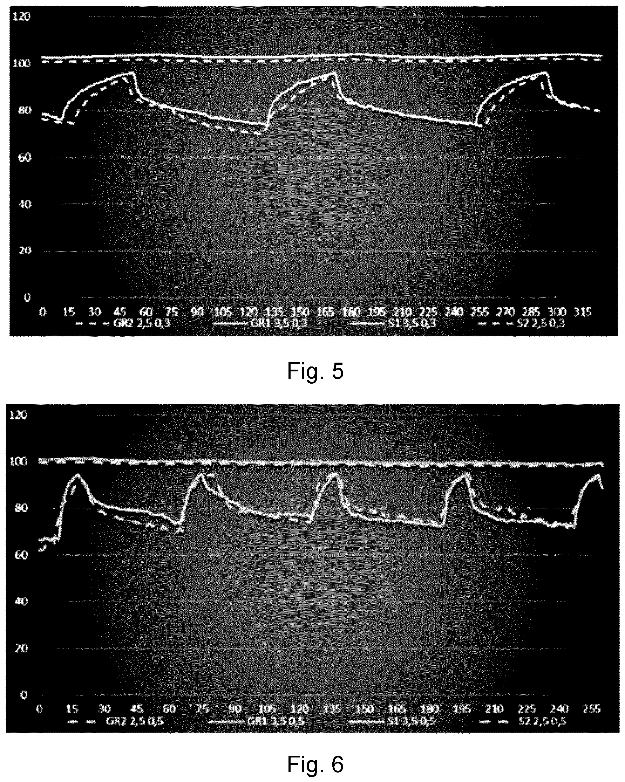

The data collected is shown in the following Table 1 and the results are represented in the graph of Figure 5.

**Table 1**

| Cycle | Group 1 | | Group 2 | |
|---|---|---|---|---|
| | T chamber 1 (°C) | T outlet 1 (°C) | T chamber (2) (°C) | T outlet 2 (°C) |
| 1 | 103.63 | 95.86 | 101.58 | 93.92 |
| 2 | 103.78 | 95.88 | 101.87 | 93.75 |
| 3 | 103.81 | 95.79 | 102.01 | 93.32 |
| Mean | 103.74 | 95.84 | 101.82 | 93.66 |
| Deviation ± | 0.18 | 0.09 | 0.43 | 0.6 |

It is concluded from the data shown and from Figure 5 that the dispensing time is long, around 65 s, due to the fact that the flow nozzle of 0.3 mm impedes a smooth movement of the coffee. The temperature of the injection chamber is constant the whole time in both groups. The coffee outlet temperatures are different, due to the temperature nozzles of each group, group 2 having a nozzle of 2.5 mm diameter being always at lower temperature.

### Configuration 2:

| | Diameter of temperature nozzle | Diameter of flow nozzle |
|---|---|---|
| Group 1 | 3.5 mm | 0.5 mm |
| Group 2 | 2.5 mm | |

The data collected is shown in the following Table 2 and the results are represented in the graph of Figure 6.

**Table 2**

| Cycle | Group 1 | | Group 2 | |
|---|---|---|---|---|
| | T chamber 1 (°C) | T outlet 1 (°C) | T chamber (2) (°C) | T outlet 2 (°C) |
| 1 | 101.23 | 94.08 | 99.75 | 93.91 |
| 2 | 100.26 | 94.64 | 99.22 | 93.38 |
| 3 | 99.68 | 94.02 | 98.81 | 94.77 |
| 4 | 99.42 | 94.18 | 98.39 | 94.54 |
| 5 | 99.09 | 94.35 | 98.36 | 93.58 |
| Mean | 99.93 | 93.47 | 98.90 | 93.60 |
| Deviation ± | 2.14 | 0.09 | 1.39 | 1.39 |

It is concluded from the data shown and from Figure 6 that the dispensing time is short, around 25 s, due to the fact that the flow nozzle of 0.5 mm allows a movement of the liquid under better conditions than the preceding one and a greater flow rate. The appearance at the coffee outlet is creamy. The temperature of the injection chamber is constant the whole time in both groups. The coffee outlet temperature is maintained, with a minimal deviation within the optimal parameters. One could say that the configuration of group 1 is ideal for this capsule.

### Configuration 3:

| | Diameter of temperature nozzle | Diameter of flow nozzle |
|---|---|---|
| Group 1 | 3.5 mm | 0.75 mm |
| Group 2 | 2.5 mm | |

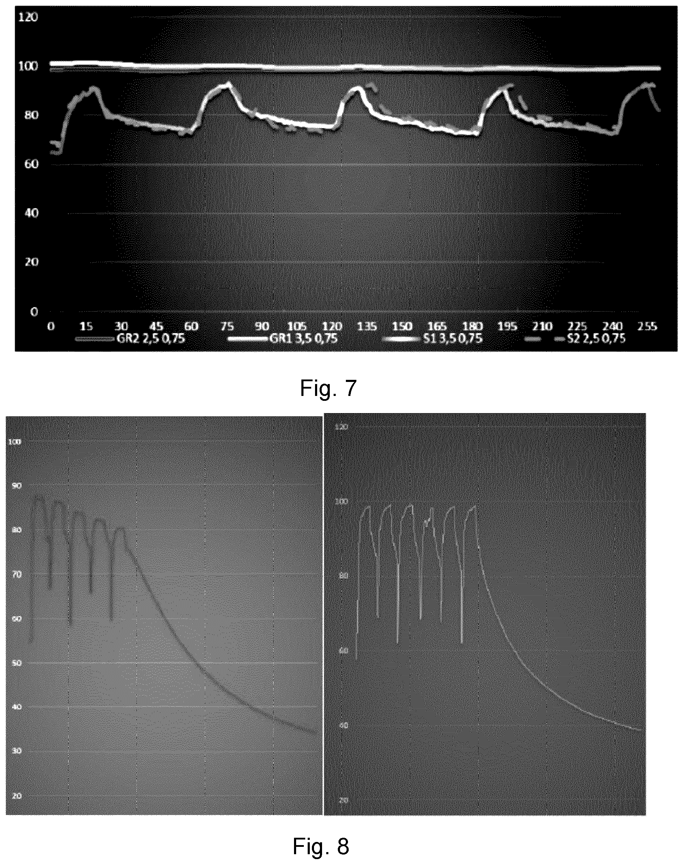

The data collected is shown in the following Table 3 and the results are represented in the graph of Figure 7.

**Table 3**

| Cycle | Group 1 | | Group 2 | |
|---|---|---|---|---|
| | T chamber 1 (°C) | T outlet 1 (°C) | T chamber (2) (°C) | T outlet 2 (°C) |
| 1 | 101.10 | 90.06 | 98.72 | 90.78 |
| 2 | 100.18 | 93.04 | 98.76 | 92.19 |
| 3 | 99.72 | 91.10 | 98.87 | 92.61 |
| 4 | 99.11 | 89.04 | 98.60 | 92.46 |
| 5 | 98.98 | 92.91 | 98.98 | 92.63 |
| Mean | 99.81 | 91.23 | 98.78 | 92.13 |
| Deviation ± | 2.12 | 4.00 | 0.38 | 1.83 |

It is concluded from the data shown and from Figure 7 that the dispensing time is reduced to around 20 s, due to the fact that the flow nozzle of 0.75 mm allows the coffee to move better and increases the flow rate. The appearance at the coffee outlet is creamy. The temperature of the injection chamber is constant the whole time in both groups. This configuration would be good for a type of coffee only of 2 cups.

### Comparative Example 2

A comparison is carried out for the outlet temperature stability between the group that comprises the chamber of the invention and another one that comprises a conventional chamber. The results are shown in Figure 8.

In this figure (at left) one observes that, in the case of the conventional chamber, the outlet temperature decreases in each dispensing, starting from 89° C for the first dispensing and reaching 80° C in the fifth dispensing. However, in the group with the chamber of the invention (at right), one notices that the outlet temperature is maintained stable, one dispensing after another.

## Claims

1. An improved water injection chamber for capsule coffee makers, being those of the type that comprise a boiler (1) where water is heated, connected by means of a duct (2) to a source of tap water or to a reservoir, and an injection chamber (3) for injecting hot water into an infusion chamber containing the coffee capsule, **characterized in that** the injection chamber (3) is formed by a lead-free brass block and comprises
an inlet duct (4) for hot water coming from the boiler (1),
a water outlet duct (5) situated downstream from the inlet duct (4), directing the return water to the boiler (1),
a channel (6) extending from one end to the other of the chamber (3) perpendicular to the ducts (4, 5), said ducts (4, 5) terminating in the channel (6), with a fluidic communication between the water inlet and outlet ducts (4, 5) of the chamber and the channel (6).

2. The water injection chamber according to claim 1, further **characterized in that** the channel (6) houses in its interior a nozzle (7) regulating the flow rate of water entering the infusion chamber, cooperating with a connection pipe (8) of an activation means of the water entry into said infusion chamber.

3. The water injection chamber according to claim 2, further **characterized in that** a closure means (9) at the upper end of the channel (6) and in correspondence with the nozzle (7) closes the channel (6) at the top and serves as a means of adjusting the nozzle (7).

4. The water injection chamber according to claims 2 and 3, further **characterized in that** the nozzle (7) comprises in its interior a filter for filtering the hot water going to the infusion chamber.

5. The water injection chamber according to claims 2 to 4, further **characterized in that** the nozzle (7) is situated in a zone of the injection chamber (3) that is accessible to the user.

6. The water injection chamber according to claims 2 to 5, further **characterized in that** a changing of the flow adjusting nozzle (7) modifies the flow rate of hot water going to the infusion chamber, adapting said flow rate to the specific characteristics of each capsule.

7. The water injection chamber according to claim 1, further **characterized in that** the water inlet duct (4) to the chamber (3) comprises in its interior a temperature regulating nozzle (11) that controls the temperature of said chamber, modifying the flow rate of entry of hot water into the interior of the chamber and into the channel (6).

8. The water injection chamber according to the preceding claims, further **characterized in that** the connection between the water inlet and outlet ducts (4, 5) of the chamber (3) and the channel (6) allows the heated water arriving from the boiler (1) to maintain the chamber (3) at a desired temperature, preventing the arrival of cold water in the chamber due to its movement through the ducts (4, 5) from the boiler (3), based on a thermal siphoning closed circuit of hot water circulation when the coffee maker is turned on and in resting mode.
